# EUROPÄISCHE PATENTSCHRIFT

(11) **EP 0 513 526 B1**
(45) Veröffentlichungstag und Bekanntmachung des Hinweises auf die Patenterteilung: **19.07.1995**
(21) Anmeldenummer: 92106127.1
(22) Anmeldetag: 09.04.1992
(51) Int. Cl.: A47B 88/04, B60B 33/00, F16C 13/00

(54) **Laufrolle für Rollen-Ausziehführungen**
Roller for drawer runners
Galet pour tiroirs à glissières

(30) Priorität: 03.05.1991 DE 4114454
(43) Veröffentlichungstag der Anmeldung: 19.11.1992
(73) Patentinhaber: MEPLA-WERKE LAUTENSCHLÄGER GmbH & Co. KG, D-64354 Reinheim (DE)
(72) Erfinder: Lautenschläger, Horst, D-64354 Reinheim (DE)
(74) Vertreter: Helber, Friedrich G., Dipl.-Ing.

(56) Entgegenhaltungen:
- DE-A- 3 201 994
- DE-A- 3 507 821
- DE-A- 3 910 934

## Beschreibung

Die Erfindung betrifft eine Laufrolle für Rollen-Ausziehführungen für Schubladen u.dgl. ausziehbare Möbelteile, deren drehbar auf einer Rollenachse gelagerter, aus einem formstabilen harten Kunststoff hergestellter einteiliger Rollenkörper eine offen in der Lauffläche mündende umlaufend nutartige Aussparung aufweist, in welcher ein etwas über die Lauffläche des Rollenkörpers vortretender, in wenigstens einer Bohrung oder Öffnung im Rollenkörper verankerter Laufring aus elastisch verformbarem Material, vorzugsweise elastomerem Kunststoff, angeordnet ist.

Bei Ausziehführungen, die mit Laufrollen mit einem Laufring aus elastisch verformbarem Material ausgerüstet sind (DE-GM 71 29 122) dienen die elastisch verformbaren Laufringe zur Dämpfung der beim Abrollen der Laufflächen auf den Führungs- bzw. Laufschienen der Ausziehführung entstehenden Abrollgeräusche. Damit die elastisch verformbaren Laufringe sich - insbesondere in der geschlossenen Stellung der Ausziehführung - durch den Druck des Gewichts des ausziehbaren Möbelteils nicht im Laufe der Zeit bleibend verformen können, hat es sich als zweckmäßig erwiesen, die Laufringe durch entsprechende Ausformung der Laufflächen der Führungs- und/oder Laufschienen in den der Endstellung der Laufrollen zugeordneten Bereiche zu entlasten (DE-OS 35 21 860). Die Laufringe werden bei bekannten Laufringen beispielsweise von in Umfangsnuten in den Laufrollen angeordneten Gummiringen gebildet. Es hat sich auch gezeigt, daß diese elastischen Laufringe - insbesondere bei höher belasteten Laufrollen - dazu neigen, sich im Laufe der Zeit aufzuweiten, wobei dann die Gefahr besteht, daß die Laufringe aus den Nuten austreten.

Es sind deshalb auch bereits Laufrollen der eingangs erwähnten Art entwickelt worden (DE-GM 85 22 387), bei denen der Laufring aus elastisch verformbarem Material aus im Spritzgußverfahren in den Rollenkörper eingebrachtem elastomerem Kunststoff besteht, der nicht nur die umlaufende nutartige Aussparung, sondern auch parallel zur Rollen-Drehachse verlaufende in der Aussparung mündende Bohrungen ausfüllt und so verankert wird. Die zur Herstellung des Rollenkörpers vorgesehenen und die beim Abspritzen mit dem elastomer abbindenden Kunststoffmaterial den Rollenkörper aufnehmenden Spritzgußformen werden dabei aber relativ komplex, da beispielsweise zur Erzeugung der drehachsenparallelen Bohrungen im Rollenkörper entsprechend stiftförmige Formschieber vorgesehen sein müssen, und beim Einspritzen des elastischen Kunststoffs gewährleistet sein muß, daß das elastomer abbindende Material die achsparallelen Bohrungen auch zumindest teilweise ausfüllt.

Dies gilt auch für eine aus der DE-A-39 10 934 bekannte Laufrollen-Ausgestaltung (Fig. 5 u. 6), bei welcher zwei den Laufring in der Nut verankernde Bohrungen den Rollenkörper in parallelem Abstand durchsetzten, ohne dabei eine Verbindung mit der Lagerbohrung herzustellen. Das Einspritzen des elastomeren Materials für den Laufring erfolgt auch hier durch parallel zur Rollen-Drehachse verlaufende Bohrungen. In der Beschreibung dieser Veröffentlichung ist auch ein radialer Verlauf von Nuten in den Begrenzungswänden der nutartigen Aussparung für den Laufring erwähnt,wobei dann aber eine zweiteilige Herstellung des Rollenkörpers aus Rollenkörperhälften vorausgesetzt wird.

Der Erfindung liegt die Aufgabe zugrunde, eine geräuschmindernde Laufrolle für Rollen-Ausziehführungen zu schaffen, welche die angestrebte Geräuschminderung beim Abrollen in den Lauf- bzw. Führungsschienen erbringt und die Laufringe auch bei hochbelasteten Ausziehführungen zuverlässig in der zugehörigen nutartigen Aussparung des Rollenkörpers gehalten werden, wobei die Kosten für die Herstellung der Laufrolle in aufeinanderfolgenden Spritzgußvorgängen für den Rollenkörper und den Laufringen durch Vereinfachung der Spritzgußformen preisgünstiger wird.

Ausgehend von einer Laufrolle der eingangs erwähnten Art wird diese Aufgabe erfindungsgemäß dadurch gelöst, daß die wenigstens eine Bohrung oder Öffnung als Durchgangsöffnung ausgebildet ist bzw. sind, welche sich radial vom Boden der nutartigen Aussparung bis zur Oberfläche der die Rollenachse aufnehmenden Lagerbohrung im Rollenkörper erstreckt.

Der radiale Verlauf der Durchgangsöffnung erlaubt es, die Spritzgußform für den Rollenkörper mit einem festen zapfenartigen Formenansatz für die Durchgangsöffnung zu versehen, sofern die Teilungsebene für die Spritzguß-Formhälften rechtwinklig zu diesem zapfenartigen Ansatz und somit der im Rollenkörper entstehenden Durchgangsöffnung angeordnet wird. D.h. beim Entformen der abgespritzten Form gesondert zu ziehende Formenschieber sind nicht erforderlich. Die radiale Durchgangsöffnung dient dabei gleichzeitig als Einspritzkanal für das im zweiten Schritt in den Rollenkörper einzuspritzende elastomer abbindende Kunststoffmaterial und verankert den Laufring im Rollenkörper.

In vorteilhafter Weiterbildung der Erfindung können zwei in Flucht diametral gegenüberliegende radiale Durchgangsöffnungen im Rollenkörper vorgesehen sein, die dann beim Spritzvorgang des Rollenkörpers von jeweils einem in jeder Formenhälfte vorgesehenen starren zapfenartigen Formenansatz gebildet werden.

Die Durchgangsöffnungen werden in ihrer parallel zur Rollen-Drehachse gemessenen Breite dabei vorzugsweise etwa gleich der Breite der den elastischen Laufring aufnehmenden Nut bemessen, um beim Einspritzen des elastomer abbindenden Kunststoffs Fließbehinderungen am Übergang zwischen der radialen Durchgangsöffnung und dem Boden der nutartigen Aussparung zu vermeiden.

Der Boden der nutartigen Aussparung kann im einfachsten Fall in der seitlichen Projektion einen kreisförmigen Verlauf haben, wobei der Laufring der fertigen Laufrolle dann in Umfangsrichtung gesehen eine gleichmäßige radiale Dicke hat.

Alternativ kann die Ausgestaltung jedoch so getroffen sein, daß der Boden der umlaufenden Nut in der seitlichen Projektion einen unrunden, vorzugsweise polygonalen Verlauf hat. Der Laufring ändert seine Radialerstreckung dann in Umfangsrichtung gesehen entsprechend der unterschiedlichen Tiefe der Aussparung und wird auf diese Weise zusätzlich in der nutartigen Aussparung verankert.

Die Verankerung des Laufrings im Rollenkörper kann noch sicherer dadurch gemacht werden,daß parallel zu der radial verlaufenden Durchgangsöffnung bzw. den Durchgangsöffnungen wenigstens eine weitere mit dem elastischen Material des Laufrings gefüllte Durchgangsöffnung vorgesehen ist, welche den Rollenkörper seitlich neben der Lagerbohrung durchsetzt und an beiden Enden im Boden der nutartigen Aussparung mündet,wobei die Ausgestaltung vorzugsweise so getroffen ist, daß zwei sich jeweils auf gegenüberliegenden Seiten der Lagerbohrung durch den Rollenkörper erstreckende weitere Durchgangsöffnungen vorgesehen sind.

Die Erfindung ist in der folgenden Beschreibung zweier Ausführungsbeispiele in Verbindung mit der Zeichnung näher erläutert, und zwar zeigt:
- Fig. 1: eine Ansicht auf die Lauffläche eines ersten Ausführungsbeispiels einer in der erfindungsgemäßen Weise ausgebildeten Laufrolle;
- Fig. 2: eine Schnittansicht durch die Laufrolle, gesehen in Richtung der Pfeile 2-2 in Fig. 1;
- Fig. 3: eine der Fig. 1 entsprechende Ansicht eines zweiten Ausführungsbeispiels einer erfindungsgemäßen Laufrolle; und
- Fig. 4: eine Schnittansicht durch die Laufrolle gesehen in Richtung der Pfeile 4-4 in Fig. 3.

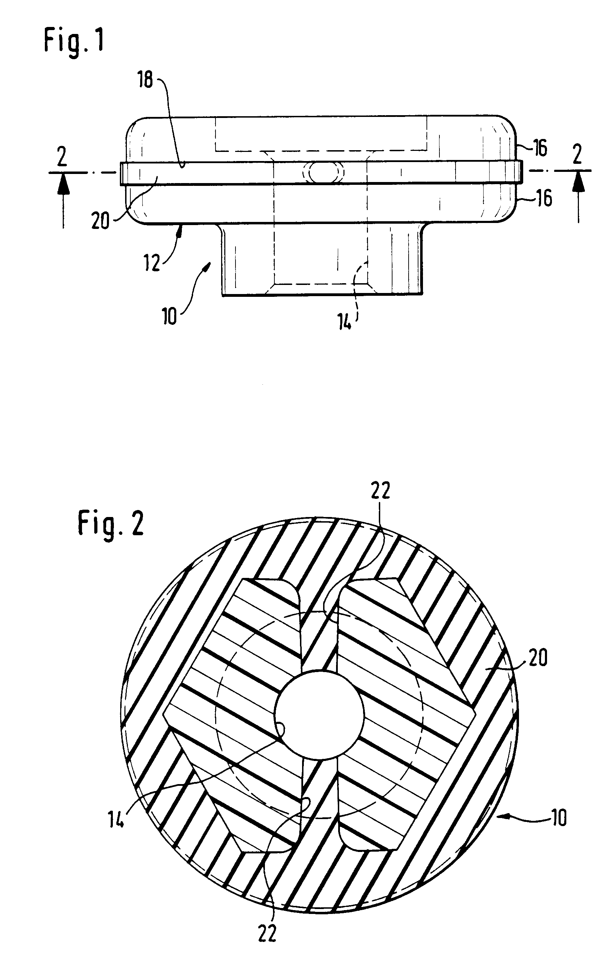

Die in Fig. 1 und 2 gezeigte, in ihrer Gesamtheit mit 10 bezeichnete Laufrolle weist einen im Spritzgußverfahren aus einem geeigneten Kunststoff hergestellten starren Rollenkörper 12 auf, der die Form einer relativ dicken kreisförmigen Scheibe hat und mit einer Mittelbohrung 14 versehen ist, welche die Lagerbohrung für die drehbare Lagerung des Rollenkörpers 12 auf einem - nicht gezeigten - an der Lauf- oder Führungsschiene einer Ausziehführung befestigten Lagerzapfen bildet. In der von der Umfangsfläche der kreisförmigen Scheibe gebildeten Lauffläche 16 des Rollenkörpers 12 ist eine umlaufende nutartige Aussparung 18 vorgesehen, welche durch einen Laufring 20 aus einem elastisch verformbaren Material - vorzugsweise einem elastomeren Kunststoff - ausgefüllt ist, wobei dieser Laufring 20 die Lauffläche 16 des Rollenkörpers 12 in Radialrichtung noch etwas überragt, so daß das Gewicht eines mittels mit Laufrollen 10 versehenen Ausziehführungen in einem Schrankkorpus gelagerten ausziehbaren Möbelteils, beispielsweise einer Schublade, also primär, über den vorstehenden Abschnitt des Laufrings 20 auf den zugeordneten Profilschenkel der Lauf- oder Führungsschiene der Ausziehführung übertragen wird. Infolge der elastischen Verformbarkeit des Materials des Laufrings wird dieser sich allerdings - abhängig vom Gewicht des ausziehbaren Möbelteils - mehr oder weniger elastisch verformen, so daß bei sehr hoher Gewichtsbelastung der vorstehende Ringabschnitt des Laufrings 20 im Bereich der Gewichtsbelastung in die Aussparung 18 zurückverformt wird und dann ein Teil des Gewichts über die starre Lauffläche 16 des Rollenkörpers 12 auf die zugeordnete Lauf- oder Führungsschiene übertragen wird.

Die Einbringung des Laufrings 20 in den Rollenkörper 12 derart, daß er nicht nur die Aussparung 18 vollständig ausfüllt, sondern auch noch in der geschilderten Weise radial über die Lauffläche 16 vortritt, erfolgt durch Einspritzen des Materials für den Laufring in fließfähigem Zustand durch - im gezeigten Fall zwei - Durchgangsöffnungen 22, welche sich zueinander fluchtend radial von der Mittelbohrung 14 jeweils zum Boden der nutartigen Aussparung 18 im Rollenkörper 12 erstrecken. Der Rollenkörper 12 wird dabei in eine ihn allseitig umschließenden Form gehalten, in welcher im Bereich der Lauffläche eine Ringnut ausgebildet ist, in welche das eingespritzte Material eintritt und dadurch den die Lauffläche 16 radial überragenden Ringbereich ausbildet.

Das Material für den Laufring wird entweder ein nach dem Erkalten die gewünschte elastische Verformbarkeit aufweisender thermoplastischer Kunststoff in erwärmten Zustand oder auch ein unmittelbar vor dem Einspritzen aus zwei flüssigen Komponenten aufbereiteter und sich dann durch chemische Reaktionen der beiden Komponenten in den elastomeren Zustand verfestigender Kunststoff verwendet, wobei diese chemische Reaktion (z.B. Polykondensation) durch Wärmezufuhr über die beheizte Form beschleunigt werden kann.

Das mittels einer geeignet ausgebildeten, in die Mittelbohrung 14 eingeführten Spritzdüse über die Durchgangsöffnung 22 in die umlaufende Aussparung 18 eingespritzte Material des Laufrings 20 füllt nicht nur die Aussparung 18, sondern auch die Durchgangsöffnung 22 aus, wodurch die erforderliche Verankerung des Laufrings 20 gegen Verdrehung relativ zum Rollenkörper 12 gewährleistet wird. Darüber hinaus ist im dargestellten Fall die Tiefe der umlaufenden Aussparung in Umfangsrichtung nicht gleich. Vielmehr hat der Boden der Aussparung beim dargestellten Ausführungsbeispiel in der seitlichen Projektion den in Fig. 2 erkennbaren sechseckigen Verlauf. Auch hierdurch wird der Laufring 20 in der umlaufenden Aussparung 18 in Laufrollen-Drehrichtung verankert.

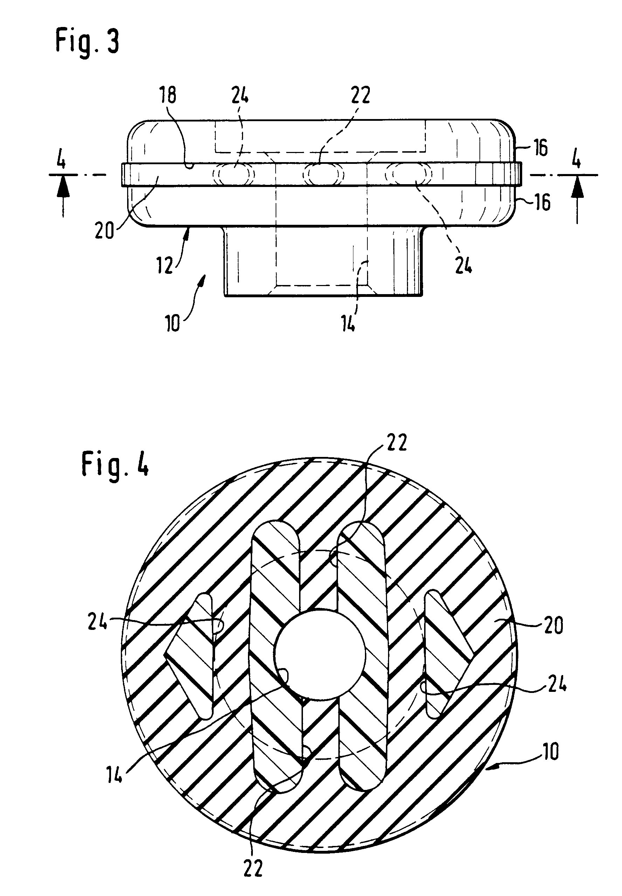

Die in den Fig. 3 und 4 gezeigte Laufrolle entspricht der vorstehend in Verbindung mit den Fig. 1 und 2 beschriebenen Laufrolle 10 weitgehend und gleichen Teilen beider Laufrollen sind in der Zeichnung auch gleiche Bezugszeichen zugeordnet, so daß es genügt nachstehehend nur die getroffenen Weiterbildungen zu erläutern, während im übrigen auf die vorausgehende Beschreibung verwiesen werden kann.Die wesentliche, zur noch besseren Verankerung des Laufrings im Rollenkörper getroffene Weiterbildung betrifft die Ausbildung zweier seitlich parallel zu den radialen Durchgangsöffnungen 22 versetzten und auf gegenüberliegenden Seiten der Lagerbohrung 14 den Rollenkörper 12 durchsetzenden weiterer Durchgangsöffnungen 24, welche beim Abspritzen des Rollenkörpers mit dem elastisch abbindenden Kunststoff mit ausgefüllt werden und integral mit dem Laufring 20 zusammenhängen.

Es ist ersichtlich, daß im Rahmen des Erfindungsgedankens Abwandlungen und Weiterbildungen der dargestellten und beschriebenen Ausführungsbeispiele verwirklichbar sind, welche sich auf die Möglichkeit einer zusätzlichen Profilierung der Seitenwände der nutartigen Aussparung 18 oder einen abweichenden Verlauf des Bodens dieser Aussparung beziehen. Bei der bevorzugten einstückigen Herstellung des Rollenkörpers ist dabei lediglich dafür Sorge zu tragen, daß solche zusätzlichen Profilierungen oder abweichenden Führungen des Bodens die Öffnung der Formhälten nicht behindern, d.h. keine zusätzlichen Formenschieber erfordern.

## Patentansprüche

1. Laufrolle (10) für Rollen-Ausziehführungen für Schubladen u.dgl. ausziehbare Möbelteile, deren drehbar auf einer Rollenachse gelagerter, aus einem formstabilen harten Kunststoff hergestellter einteiliger Rollenkörper (12) eine offen in der Lauffläche mündende umlaufende nutartige Aussparung (18) aufweist, in welcher ein etwas über die Lauffläche des Rollenkörpers vortretender, in wenigstens einer Bohrung oder Öffnung im Rollenkörper verankerter Laufring (20) aus elastisch verformbarem Material, vorzugssweise elastomerem Kunststoff, angeordnet ist,
**dadurch gekennzeichnet**,
daß die wenigstens eine Bohrung oder Öffnung als Durchgangsöffnung (22) ausgebildet ist bzw. sind, welche sich radial vom Boden der nutartigen Aussparung (18) bis zur Oberfläche der die Rollenachse aufnehmenden Lagerbohrung (14) im Rollenkörper (12) erstreckt.

2. Laufrolle nach Anspruch 1, dadurch gekennzeichnet, daß zwei in Flucht diametral gegenüberliegende radiale Durchgangsöffnungen (22) vorgesehen sind.

3. Laufrolle nach Anspruch 1 oder 2, dadurch gekennzeichnet, daß die Durchgangsöffnung(en) (22) in ihrer parallel zur Rollen-Drehachse gemessenen Breite etwa gleich der Breite der den elastischen Laufring (20) aufnehmenden nutartigen Aussparung (18) ist bzw. sind.

4. Laufrolle nach einem der Ansprüche 1 bis 3, dadurch gekennzeichnet, daß der Boden der nutartigen Aussparung (18) in der seitlichen Projektion einen kreisförmigen Verlauf hat.

5. Laufrolle nach einem der Ansprüche 1 bis 4, dadurch gekennzeichnet, daß der Boden der nutartigen Aussparung (18) in der seitlichen Projektion einen unrunden, vorzugsweise polygonalen Verlauf hat.

6. Laufrolle nach Anspruch 1 oder 2, dadurch gekennzeichnet, daß parallel zu der radial verlaufenden Durchgangsöffnung bzw. den Durchgangsöffnungen (22) wenigstens eine weitere mit dem elastischen Material des Laufrings (20) gefüllte Durchgangsöffnung (24) vorgesehen ist, welche den Rollenkörper (12) seitlich neben der Lagerbohrung (14) durchsetzt und an beiden Enden im Boden der nutartigen Aussparung (18) mündet.

7. Laufrolle nach Anspruch 6, dadurch gekennzeichnet, daß zwei sich jeweils auf gegenüberliegenden Seiten der Lagerbohrung (14) durch den Rollenkörper (12) erstreckende weitere Durchgangsöffnungen (24) vorgesehen sind.

## Claims

1. Wheel (10) for roller drawer guides for drawers and other such drawer-like furniture parts, whose integral wheel (12) journaled on a wheel axle and made from a shape-stable, hard plastic has a circumferential groove (18) in the tread surface, in which there is disposed a tire (20) of resiliently deformable material, preferably elastomeric plastic, protruding slightly above the tread surface of the wheel body and anchored in at least one bore or opening in the wheel body,
**characterized** in that the at least one bore or opening is configured as a through-opening (22), which extends radially from the bottom of the groove (18) to the surface of the bearing bore (14) in the wheel body (12) that accommodates the wheel axle.

2. Wheel according to claim 1, characterized in that two radial through-bores (22) are provided diametrically opposite and in alignment with one another.

3. Wheel according to claim 1 or 2, characterized in that the through-bores (22) are approximately equal, in their width measured parallel to the wheel's axis of rotation, to the width of the groove (18) receiving the resilient tire (20).

4. Wheel according to any one of claims 1 to 3, characterized in that the bottom of the groove (18) has in lateral projection a circular shape.

5. Wheel according to any one of claims 1 to 4, characterized in that the bottom of the groove (18) has in lateral projection an un-round, preferably polygonal, shape.

6. Wheel according to claim 1 or 2, characterized in that, parallel to the radially disposed through-bore or through-bores (22), at least one additional through-bore (24) filled with the resilient material of the tire (20) is provided, which passes through the wheel body (12) laterally beside the journal bore (14) and opens at both ends in the bottom of the groove (18).

7. Wheel according to claim 6, characterized in that two additional through-bores (24) extending through the wheel body (12) are provided, one on each opposite side of the journal bore (14).

## Revendications

1. Galet de roulement (10) pour des guidages d'extraction à rouleaux pour tiroirs ou parties de meuble analogues extractibles, dont le corps de rouleau (12) monopièce, fabriqué en une matière synthétique dure, à stabilité de forme, monté sur un axe de rouleau de façon à lui permettre de tourner, présente un évidement (18) en forme de gorge, faisant le pourtour, ouvert et débouchant dans la surface de roulement et dans lequel est disposée une bague de roulement (20) ancrée dans au moins un perçage ou une ouverture ménagé dans le corps de rouleau et faisant saillie quelque peu au-dessus de la surface de roulement du corps de roulement, réalisée en un matériau élastiquement déformable, de préférence une matière synthétique élastomère, caractérisé en ce que le au moins un perçage ou ouverture est réalisé sous forme d'ouverture traversante (22), s'étendant radialement dans le corps de rouleau (12) depuis le fond de l'évidement (18) en gorge jusqu'à la surface du perçage de palier (14), recevant l'axe de rouleau.

2. Galet de roulement selon la revendication 1, caractérisé en ce que sont prévus deux ouvertures traversantes (22) radiales, diamétralement opposées et alignées.

3. Galet de roulement selon la revendication 1 ou 2, caractérisé en ce que la ou les ouvertures traversantes (22) est, respectivement sont, d'une largeur, lorsque l'on mesure parallèlement à l'axe de rotation du galet, à peu près égale à la largeur de l'évidement (18) en gorge recevant la bague de roulement (20) élastique.

4. Galet de roulement selon l'une des revendications 1 à 3, caractérisé en ce que le fond de l'évidement (18) en gorge a une allure circulaire lorsqu'on l'observe en projection latérale.

5. Galet de roulement selon l'une des revendications 1 à 4, caractérisé en ce que le fond de l'évidement en gorge (18) a une allure non-ronde, de préférence polygonale, lorsqu'on l'observe en projection latérale.

6. Galet de roulement selon la revendication 1 ou 2, caractérisé en ce que, parallèlement à la ou aux ouvertures traversantes (22) s'étendant radialement, est prévue au moins une ouverture traversante (24), remplie du matériau élastique de la bague de roulement (20) et traversant le corps de galet (12) latéralement à côté du perçage de palier (14) et débouchant aux deux extrémités dans le fond de l'évidement (18) en gorge.

7. Galet de roulement selon la revendication 6, caractérisé en ce que sont prévues deux ouvertures traversantes (24) supplémentaires, s'étendant sur les côtés opposés du perçage de palier (14), à travers le corps de galet (12).
